# EUROPÄISCHE PATENTANMELDUNG

(11) **EP 2 854 211 A1**
(43) Veröffentlichungstag der Anmeldung: **01.04.2015**
(21) Anmeldenummer: 13186713.7
(22) Anmeldetag: 30.09.2013
(51) Int. Cl.: H01M 10/613, B60H 1/00, B60L 11/18, H01M 10/615, H01M 10/625, H01M 10/6556, H01M 10/6571, F28D 9/00

(54) **Heiz- und Kühlvorrichtung für eine Batterie**

(71) Anmelder: MAHLE Behr GmbH & Co. KG, 70469 Stuttgart (DE); Behr France Rouffach SAS, 68250 Rouffach (FR)
(72) Erfinder: Brandauer, Jakob, 71665 Vaihingen/Enz (DE); Hirsch, Stefan, 70180 Stuttgart (DE); Miss, Pascal, 67600 Sélestat (FR); Schäfer, Bernd, 70176 Stuttgart (DE); Treier, Joachim, 77728 Oppenau (DE); Weingaertner, Stéphane, 68250 Pfaffenheim (FR)
(74) Vertreter: BRP Renaud & Partner mbB Rechtsanwälte Patentanwälte Steuerberater

(57) **Zusammenfassung**

Die Erfindung betrifft eine Heiz- und Kühlvorrichtung (1) für eine Batterie, insbesondere eines Kraftfahrzeugs,
- mit einer Bodenplatte (2), in welcher wenigstens ein Fluidpfad zum Durchströmen mit einem Kühlmittel oder Kältemittel vorgesehen ist,
- mit einer Isolierplatte (3),
- mit wenigstens einem Trägerteil (4), in welchem jeweils wenigstens ein thermisch mit der Bodenplatte (2) gekoppeltes elektrisches Heizelement (11) aufgenommen ist,
- mit einer Abdeckplatte (18),
- wobei die Bodenplatte (2), die Isolierplatte (3), das wenigstens eine Trägerteil (4) und die Abdeckplatte, entlang einer Stapelrichtung (S; S') benachbart zueinander angeordnet sind.

## Beschreibung

Die vorliegende Erfindung betrifft eine Heiz- und Kühlvorrichtung für eine Batterie sowie eine Batterieanordnung mit einer solchen Heiz- und Kühlvorrichtung. Die Erfindung betrifft ferner ein Kraftfahrzeug mit einer solchen Batterieanordnung.

Wiederaufladbare Batteriesysteme für Elektrofahrzeuge mit rein elektrischem Antrieb sowie für Hybridfahrzeuge und Fahrzeuge mit Brennstoffzellenantrieb sind Gegenstand aktueller Forschung. Gegenwärtig werden in den genannten Fahrzeuggattungen bevorzugt Lithium-Ionen-Batterien eingesetzt, welche sich durch eine hohe Energiedichte und einen nur schwach ausgeprägten, unerwünschten Memory-Effekt auszeichnen. Die Fähigkeit einer wiederaufladbaren Batterie, verschiedene in Kraftfahrzeugen verbaute elektrische Verbraucher zuverlässig mit elektrischer Energie zu versorgen, hängt in erheblichem Maße von den in der Umgebung der Batterie herrschenden thermischen Bedingungen ab. Denn sowohl die beim Bereitstellen als auch bei der Aufnahme von elektrischer Energie - im Sinne eines Wiederaufladens - in der Batterie ablaufenden elektrochemischen Prozesse sind in nicht unerheblichem Maße von der Betriebstemperatur der Batterie abhängig. Umfangreiche Untersuchungen an verschiedenen Batteriesystemen auf Lithium-Ionen-Basis haben etwa gezeigt, dass unterhalb einer kritischen Temperatur, etwa im Bereich von ca. 0°C, die von der Batterie zur Verfügung gestellte elektrische Energiedichte im Vergleich zu höheren Betriebstemperaturen stark abnimmt. Unterhalb dieser Temperatur kann es zudem beim Laden zu einer Schädigung der Li-Ionen-Zelle kommen.

Entscheidend für einen zuverlässigen und störungsfreien Betrieb besagter Batterien - dies gilt nicht nur für genannte Batterien auf Lithium-Ionen-Basis, sondern generell für beliebige wiederaufladbare Batteriesysteme - ist also die Schaffung thermisch wohldefinierter Umgebungsbedingungen. Dies bedeutet im Hinblick auf die etwa in einem Kraftfahrzeug betriebsmäßig auftretenden, erheblichen Temperaturschwankungen, dass diese durch geeignete, thermisch mit der Batterie gekoppelte Temperiervorrichtungen ausgeglichen werden müssen, um die Umgebungstemperatur der Batterie - und somit auch die Temperatur der Batterie selbst - innerhalb eines vorgegebenen Temperaturintervalls konstant zu halten. Eine solche Vorrichtung muss einerseits in der Lage sein, die Umgebungstemperatur in der unmittelbaren Umgebung der Batterie zu erhöhen, falls diese einen Wert annimmt, der unterhalb des zulässigen Temperaturbereichs liegt. Andererseits muss auch die Möglichkeit gegeben sein, die Umgebungstemperatur abzusenken, falls diese besagtes Temperaturintervall nach oben überschreitet.

Aus dem Stand der Technik bekannt sind verschiedene, mit einer Batterie thermisch koppelbare Vorrichtungen, welche in der Regel sowohl eine Heizeinheit zum Erhöhen der Batterietemperatur als auch ein Kühlsystem zum Absenken der Batterietemperatur umfassen.

So ist in der DE 10 2009 90 588 19 A1 eine Vorrichtung zum Heizen und Kühlen einer Batterie beschrieben, welche einen Kühlmittelkreislauf und wenigstens ein elektrisches Heizelement aufweist, welche beide in einem gemeinsamen Wärmeübertragungsbauteil angeordnet sind. Das elektrische Heizelement ist dabei form- und/oder kraftschlüssig mit dem Wärmeübertragungsbauteil verbunden. Charakteristisch für die Vorrichtung ist, dass sie eine relativ große Anzahl von Bauelementen bedingt, welche bei einem Heizvorgang konstruktionsbedingt vom Heizelement mitaufgeheizt werden, was die zum eigentlich angestrebten Erwärmen der Batterie erforderliche Heizleistung deutlich erhöht.

Der Erfindung liegt daher die Aufgabe zugrunde, eine Heiz- und Kühlvorrichtung für eine Batterie zu schaffen, die sich durch effektive thermische Kopplung mit der zu heizenden bzw. zu kühlenden Batterie auszeichnet und sich gleichzeitig durch einen einfachen konstruktiven Aufbau mit einer geringen Anzahl an Bauteilen auszeichnet. Die Erfindung hat ferner die Aufgabe, eine Batterieanordnung mit einer zu temperierenden Batterie um eine solche Heiz- und Kühlvorrichtung zu erweitern. Schließlich hat die Erfindung die Aufgabe, ein Kraftfahrzeug mit einer solchen Batterieanordnung anzugeben.

Die genannten Aufgaben werden erfindungsgemäß durch den Gegenstand der unabhängigen Patentansprüche gelöst. Bevorzugte Ausführungsformen sind Gegenstand der abhängigen Ansprüche.

Grundgedanke der Erfindung ist demnach, eine Heiz- und Kühlvorrichtung für eine Batterie plattenartig mit einer Bodenplatte und einer Abdeckplatte auszubilden und im Bereich zwischen Bodenplatte und Abdeckplatte sowohl Heiz- als auch Kühlelemente zum Beheizen bzw. Kühlen einer thermisch an die Bodenplatte angekoppelten Batterie anzuordnen. Dies erlaubt es, die zur Fertigung einer solchen Heiz- und Kühlvorrichtung benötigte Zahl an Bauteilen gering zu halten, so dass die thermischen Verluste einer solchen Vorrichtung ebenfalls gering gehalten werden können. Die stapelartige Anordnung der einzelnen plattenartigen Bauteile der Heiz- und Kühlvorrichtung ermöglicht zudem eine flächige und somit hochwirksame thermische Anbindung der Batterie an die Heiz- und Kühlvorrichtung bei gleichzeitig sehr kompakter Bauweise derselben.

Vorzugsweise kann an der Heiz- und Kühlvorrichtung eine elektrisch isolierende Isolierung vorgesehen sein, welche in der Heiz- und Kühlvorrichtung zwischen Bodenplatte und Trägerteil angeordnet ist. Diese verhindert einen unerwünschten elektrischen Kontakt der elektrischen Heizelemente mit der typischerweise aus einem Metall gefertigten, also elektrisch leitenden Bodenplatte, welche eine Gehäusefunktion ausübt und somit außenseitig dem Körperkontakt durch einen Benutzer ausgesetzt sein kann. Um die thermische Ankopplung der Heizelemente an die Bodenplatte nicht unnötig herabzusetzen, sollte die Isolierung eine möglichst hohe Wärmeleitfähigkeit aufweisen.

Bei einer bevorzugten Ausführungsform umfasst die Heiz- und Kühlvorrichtung genau ein als Trägerplatte ausgebildetes Trägerteil mit wenigstens zwei Durchgangsöffnungen, in welchen jeweils ein elektrisches Heizelement angeordnet ist. Ein derart modularer Aufbau der Heizvorrichtung mit separaten Heizelementen, welche in einer gemeinsamen Trägerplatte eingesetzt sind, erweist sich als fertigungstechnisch besonders vorteilhaft. Für eine optimale thermische Ankopplung der Heizelemente an die Trägerplatte empfiehlt es sich dabei, diese hinsichtlich ihrer räumlichen Abmessungen derart zu dimensionieren, dass sie die besagten Durchgangsöffnungen möglichst vollständig ausfüllen. Hierzu können die einzelnen Heizelemente insbesondere in der Art von Heizplatten ausgestaltet sein, welche in einem in der Trägerplatte montierten Zustand die jeweilige Durchgangsöffnung möglichst vollständig ausfüllen. Die Befestigung der Heizelemente am Trägerteil erfolgt bevorzugt mit Hilfe eines geeigneten, sich vorteilhafterweise durch eine hohe Wärmeleitfähigkeit auszeichnenden Klebstoffs. Eine besonders präzise Montage der Heizelemente in den Durchgangsöffnungen gelingt, indem am die Durchgangsöffnungen einfassenden Randbereich des Trägerteils geeignete, nach innen in die Durchgangsöffnung abstehende Vorsprünge vorgesehen werden, welche beim Einsetzen der Heizelemente in der Art eines Anschlags wirken.

Um die elektrischen Heizelemente der Heiz- und Kühlvorrichtung mit elektrischer Energie zu versorgen, bietet es sich an, sowohl zwischen dem Trägerteil und der Abdeckplatte als auch zwischen dem Trägerteil und der Isolierung eine elektrisch leitende Kontaktplatte vorzusehen, welche zum Versorgen der Heizelemente mit elektrischer Energie aus einer externen Energieversorgungseinheit elektrisch mit den Heizelementen verbunden wird. Die zwischen Trägerteil und Bodenplatte vorgesehene Isolierung kann dabei als Isolierplatte aus einem elektrisch isolierenden Material oder als eine auf der Bodenplatte angeordnete Isolierfolie aus einem elektrisch isolierenden Material oder als eine auf der Bodenplatte aufgebrachte elektrisch isolierende Isolierschicht ausgebildet sein.

Die beiden elektrischen Kontaktplatten folgen dem Wirkprinzip herkömmlicher elektrischer Leitungen, welche den Transport von elektrischer Energie von der Energieversorgungseinheit zu den elektrischen Heizelementen ermöglichen. An den plattenartig ausgebildeten Heizelementen können beidseitig elektrisch leitende Anschlusselemente vorgesehen sein, derart, dass der gewünschte elektrische Kontakt zwischen Heizelement und Kontaktplatten bereits durch den im montierten Zustand der Heiz- und Kühlvorrichtung hergestellten mechanischen Kontakt zwischen diesen beiden Bauteilen erzeugt wird. Als fertigungstechnisch besonders elegant erweist sich eine Variante, bei welcher auf den plattenartigen Heizelementen keine separaten elektrischen Anschlusselemente vorgesehen sind, sondern die Ober- und Unterseite der Heizelemente - wenigstens bereichsweise - elektrisch leitend ausgebildet sind. Die gewünschte elektrische Verbindung zwischen Heizelement und Kontaktplatte wird somit automatisch bei der Montage der jeweiligen Kontaktplatte auf dem Heizelement hergestellt. Die beiden Kontaktplatten können mit den elektrischen Heizelementen jeweils mittels eines elektrisch leitfähigen oder nichtleitenden Klebstoffs verklebt werden. Bei Verwendung eines elektrisch nichtleitenden Klebstoffs erfolgt die Kontaktierung über die Rauigkeit der Oberflächen. An jeder der beiden elektrischen Kontaktplatten kann lateral außen ein Anschlusselement vorgesehen sein, welches ein Anschließen an einen Plus- bzw. Minuspol der Energieversorgungseinheit erlaubt.

Besonders zweckmäßig kann als elektrische Energieversorgungseinheit dabei die mittels der Heiz- und Kühlvorrichtung zu temperierende Batterie selbst verwendet werden.

Besonders zweckmäßig können im Trägerteil wenigstens vier, vorzugsweise 15, höchst vorzugsweise 20, solcher Durchgangsöffnungen mit jeweiligen Heizelementen vorgesehen sein, welche bezüglich einer Draufsicht auf das Trägerteil rasterartig auf diesem angeordnet sind. Je nach gewünschter, insgesamt zu erzielender Heizleistung kann auch eine andere Zahl an solchen Heizelementen vorgesehen sein. Die vorgeschlagene, rasterartige Anordnung der Heizelemente empfiehlt sich insbesondere, wenn die von den Heizelementen erzeugte Wärme zu einer lateral möglichst gleichmäßigen Erwärmung der Bodenplatte führen soll. Es ist klar, dass anstelle besagter rasterartiger Anordnungsgeometrie jedoch grundsätzlich auch andere Formen der Anordnung der Heizelemente relativ zueinander möglich sind.

Alternativ zur oben beschriebenen Ausgestaltung der Heiz- und Kühlvorrichtung mit einem einzigen Trägerteil bietet es sich gemäß einer vorteilhaften Weiterbildung an, zwei, vorzugsweise drei, solche Trägerteile vorzusehen, welche jeweils als im Wesentlichen rechteckige Trägerrahmen ausgebildet sein können. Die Isolierung ist dabei als Isolierplatte ausgebildet, in welcher wenigstens zwei zu den Trägerteilen komplementäre Durchgangsöffnungen vorgesehen sind. Jedes Trägerteil ist dabei mit wenigstens zwei Durchgangsöffnungen versehen, in welche jeweils ein Heizelement eingesetzt werden kann, so dass es diese vorzugsweise vollständig ausfüllt. Die Fixierung der elektrischen Heizelemente in den Durchgangsöffnungen kann mittels Verkleben erfolgen. Ein konstruktiver Aufbau der Heiz- und Kühlvorrichtung mit mehreren Trägerteilen erweist sich als besonders einfach zu montieren, da sich jedes Trägerteil zunächst separat mit Heizelementen bestücken lässt. Die vormontierten Trägerteile können somit als Einheit in die in der Isolierplatte vorgesehenen Durchgangsöffnungen eingesetzt und anschließend mit der Isolierplatte verklebt werden.

Vorteilhaftweise sind die in der Isolierplatte vorgesehenen Durchgangsöffnungen im Wesentlichen reckteckförmig ausgebildet. Alternativ oder zusätzlich kann dies auch für die im Trägerteil vorgesehenen Durchgangsöffnungen vorgesehen sein.

Gemäß einer vorteilhaften Weiterbildung, welcher eine technisch einfach zu realisierende elektrische Kontaktierung der Heizelemente gestattet, wird vorgeschlagen, für jedes Trägerteil jeweils zwei individuelle elektrische Kontaktplatten, vorzugsweise aus einem Metall, bereitzustellen, welche in das als Trägerrahmen ausgebildete Trägerteil eingesetzt werden, so dass sie direkt an der Ober- bzw. Unterseite der Heizelemente anliegen. In einem solchen montierten Zustand der elektrischen Kontaktplatten sind die Heizelemente sandwichartig zwischen den beiden elektrischen Kontaktplatten in den Durchgangsöffnungen des Trägerteils angeordnet. Die beiden elektrischen Kontaktplatten können mittels eines elektrisch leitfähigen oder nichtleitfähigen Klebstoffsmit den Heizelementen verklebt werden.

Besonders zweckmäßig kann zwischen der zweiten elektrischen Kontaktplatte und der Bodenplatte eine elektrisch isolierende und wärmeleitende Deckplatte aus einer Keramik vorgesehen sein. Diese sorgt zum einen für eine elektrische Isolation der zweiten elektrischen Kontaktplatte gegenüber der Bodenplatte, ohne dass die thermische Ankopplung der Heizelemente an die Bodenplatte beeinträchtigt wird. Alternativ zu einer solchen Deckplatte aus Keramik kann auch daran gedacht sein, zwischen elektrischer Kontaktplatte und Bodenplatte Silikonklebstoff anzubringen, welcher ähnliche elektrische und wärmeleitende Eigenschaften aufweist wie besagte Keramikmaterialien.

Eine besonders gute thermische Kopplung der Heizelemente an die Bodenplatte kann indes erzielt werden, wenn die Isolierplatte auf einer der Bodenplatte zugewandten Seite mit einer im Wesentlichen komplementär zur Bodenplatte ausgebildete Oberflächengeometrie versehen wird.

Als bauraumtechnisch besonders günstig erweist sich eine Ausführungsform, bei welcher der in der Bodenplatte vorgesehene Fluidpfad durch ein auf einer der Isolierplatte zugewandten Seite angeordnetes und mit einem Kühl- oder Kältemittel durchströmbares Flachrohr ausgebildet ist, welches sich wenigstens abschnittsweise entlang einer Längsrichtung der Bodenplatte erstreckt. Unter dem Begriff "Flachrohr" sind dabei insbesondere Fluidleitungen jedweder Art gefasst, deren Höhe höchstens ein Viertel, höchst vorzugsweise höchstens ein Zehntel ihrer Breite beträgt. Ein derart ausgebildetes Flachrohr ermöglicht einen flächigen Kontakt des das Flachrohr durchströmenden Fluids mit der Bodenplatte.

Eine besonders gute Kühlleistung lässt sich dabei erzielen, wenn in der Bodenplatte nicht nur ein einziges solches Flachrohr vorgesehen wird, sondern mehrere Flachrohre, - bevorzugt wenigstens zwei, besonders bevorzugt vier solche Flachrohre - angeordnet werden, welche sich folglich entlang einer Längsrichtung der Bodenplatte im Abstand und im Wesentlichen parallel zueinander auf der Bodenplatte erstrecken.

Als fertigungstechnisch besonders vorzuziehen ist eine Ausführungsform, bei welcher das/die Flachrohr(e) jeweils integral an der Bodenplatte ausgeformt ist/sind. Alternativ dazu können die Flachrohre auch mittels Verlöten oder Verschweißen an der Bodenplatte befestigt werden.

Um den für die Heiz- und Kühlvorrichtung benötigten Bauraum möglichst gering zu halten und auf diese Weise die in der Heiz- und Kühlvorrichtung auftretenden thermischen Verluste möglichst stark zu reduzieren, empfiehlt es sich bei einer vorteilhaften Weiterbildung, die Durchgangsöffnungen in der Isolierplatte und die Flachrohre der Bodenplatte in einem montierten Zustand der Heiz- und Kühlvorrichtung bezüglich einer gemeinsamen Querrichtung von Bodenplatte und Isolierplatte abwechselnd nebeneinander anzuordnen. Da die Durchgangsöffnungen der Isolierplatte zur Aufnahme der die Heizelemente enthaltenden Trägerteile dienen, wird auf diese Weise eine homogene Verteilung der Heiz- und Kühlelemente lateral auf der Bodenplatte erzielt, wodurch wiederum eine besonders vorteilhafte, gleichmäßige Erwärmung bzw. Abkühlung der Bodenplatte erreicht wird.

Bei einer für die Temperierung etwa einer Lithium-Ionen-Batterie besonders geeigneten Ausführungsform kann die Bodenplatte mit vier Flachrohren und die Isolationsplatte mit drei Durchgangsöffnungen versehen sein, wobei in jeder Durchgangsöffnung jeweils ein mit elektrischen Heizelementen versehenes Trägerteil angeordnet ist.

Um den Verdrahtungsaufwand für die elektrische Kontaktierung der elektrischen Kontaktplatten nach außen, zum Anschluss an eine elektrische Energieversorgungseinheit, möglichst gering zu halten, wird bei einer weiterbildenden Ausführungsform vorgeschlagen, die in den drei Durchgangsöffnungen angeordneten ersten und zweiten elektrischen Kontaktplatten jeweils mittels wenigstens einer Verbindungsstrebe mechanisch starr und elektrisch leitend miteinander zu verbinden. Hierzu bietet es sich an, die Verbindungsstrebe integral an der jeweiligen elektrischen Kontaktplatte auszuformen oder diese an den betroffenen elektrischen Kontaktplatten, beispielsweise mittels eines Lötprozesses, zu befestigen. Da die jeweiligen drei ersten bzw. drei zweiten elektrischen Kontaktplatten im montierten Zustand im Wesentlichen parallel zueinander angeordnet sind, bietet es sich an, die Verbindungsstreben als Querstreben auszubilden.

Für eine vereinfachte Aufnahme der Verbindungsstreben beim Einsetzen der Trägerteile in die Durchgangsöffnungen der Isolierplatte empfiehlt es sich, in der Isolierplatte jeweils eine komplementär zur Verbindungsstrebe ausgebildete Aufnahmenut vorzusehen.

Eine besonders homogene Heizleistung lässt sich mit der erfindungsgemäßen Heiz- und Kühlvorrichtung erzielen, wenn in jedem Trägerteil fünf Heizelemente vorgesehen werden.

Besonders zweckmäßig können als Heizelemente plattenartig ausgebildete PTC-Heizelemente herangezogen werden. Deren generell plattenartiger Aufbau erlaubt es, diese ohne größere konstruktive Modifikationen in der erfindungsgemäßen Heiz- und Kühlvorrichtung zu verwenden. Solche PTC-Elemente sind kommerziell erhältlich und weisen für den Einsatz in der erfindungsgemäßen Heiz- und Kühlvorrichtung geeignete äußere Abmessungen auf. Zu denken ist etwa an PTC-Elemente mit einer Länge von ca. 35mm und einer Breite zwischen 4mm und 14mm bei einer Höhe von maximal 2mm.

Die Erfindung betrifft weiterhin eine Batterieanordnung für ein Kraftfahrzeug mit einer Batterie, insbesondere einer Lithium-Ionen-Batterie, sowie mit einer thermisch mit der Batterie gekoppelten Heiz- und Kühlvorrichtung mit einem oder mehreren der vorangehend genannten Merkmale. Die thermische Kopplung lässt sich dabei durch Befestigen der Batterie an der Heiz- und Kühlvorrichtung, etwa im Bereich der Bodenplatte, realisieren. Auch eine Befestigung im Bereich der Abdeckplatte oder seitlich an der Heiz- und Kühlvorrichtung ist vorstellbar.

Als besonders elegant erweist sich dabei eine Variante, bei welcher die mittels der Heiz- und Kühlvorrichtung zu heizende bzw. zu kühlende Batterie gleichzeitig als Energieversorgungseinheit zum Versorgen der Heizelemente der Heiz- und Kühlvorrichtung mit elektrischer Energie herangezogen wird.

Die Erfindung betrifft schließlich ein Kraftfahrzeug mit einer vorangehend vorgestellten Batterieanordnung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1-7: ein erstes Ausführungsbeispiel einer erfindungsgemäßen Heiz- und Kühlvorrichtung in verschiedenen Darstellungen,
- Fig. 8-10: ein zweites Ausführungsbeispiel einer erfindungsgemäßen Heiz- und Kühlvorrichtung, ebenfalls in verschiedenen Darstellungen.

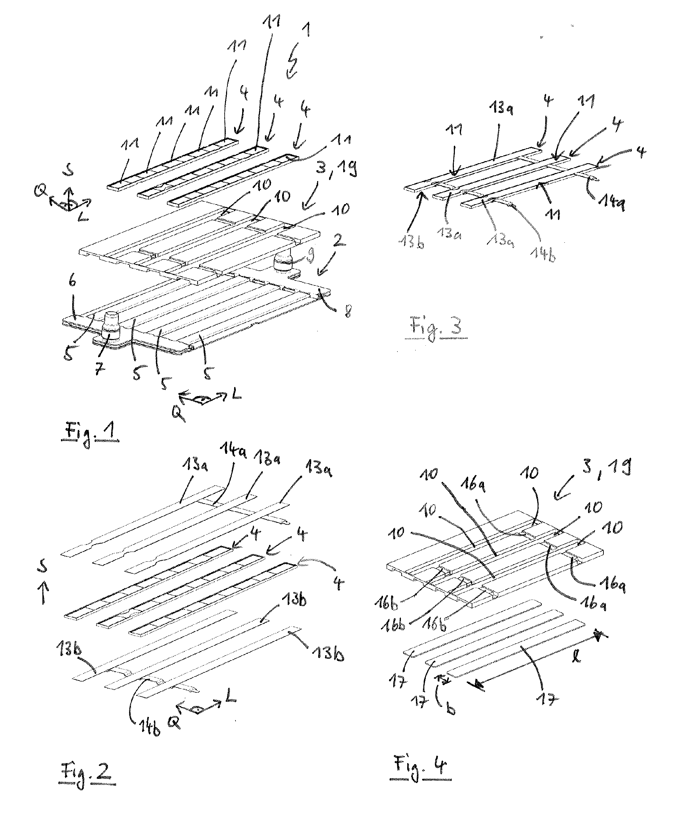

In Figur 1 illustriert sind in einer Explosionsdarstellung eine Bodenplatte 2, ein als Isolierplatte 3 ausgebildetes Isolationselement sowie drei Trägerteile 4 zur Aufnahme von Heizelementen 11. Im Beispielszenario der Figur 1 erstrecken sich jeweils entlang einer Längsrichtung L der Bodenplatte 2 - also im Wesentlichen parallel zueinander - vier Flachrohre 5, welche an der Bodenplatte 2 angelötet, angeschweißt oder integral an dieser ausgeformt sein können. Diese definieren einen Fluidpfad für ein Kühl- oder Kältemittel und werden zur Kühlung einer mit der Bodenplatte 2 thermisch gekoppelten Batterie (nicht gezeigt) von einem Kühlmittel, etwa Wasser-Glycol, oder einem Kältemittel, welches im Handel beispielsweise unter den Bezeichnungen "R134a", "R1234yF", oder "R744" bekannt ist, durchströmt. Die vier Flachrohre 5 ermöglichen einen großflächigen Kontakt des sie durchströmenden Fluids mit der Bodenplatte 2 und somit eine gute thermische Ankopplung des Fluids an die zu kühlende Batterie. Die Einleitung des Kühl- oder Kältemittels mag etwa mit Hilfe einer gemeinsamen Fluid-Zuführungsleitung 6 realisiert sein, welche sich im Beispielszenario der Figur 1 entlang einer orthogonal zur Stapelrichtung S und zur Längsrichtung L verlaufenden Querrichtung Q erstreckt, mit einer Einlassöffnung 7 versehen ist und fluidisch mit einem bzgl. der Längsrichtung L ersten Endabschnitt der vier Flachrohre 5 kommuniziert. Entsprechend mag auf der Bodenplatte 2 eine gemeinsame Fluid-Abführungsleitung 8 mit einer Auslassöffnung 7 vorgesehen sein, welche mit den vier Flachrohren 5 an einem dem ersten axialen Endabschnitt gegenüberliegenden zweiten axialen Endabschnitt in Fluidverbindung steht und sich ebenfalls entlang der Querrichtung Q erstreckt.

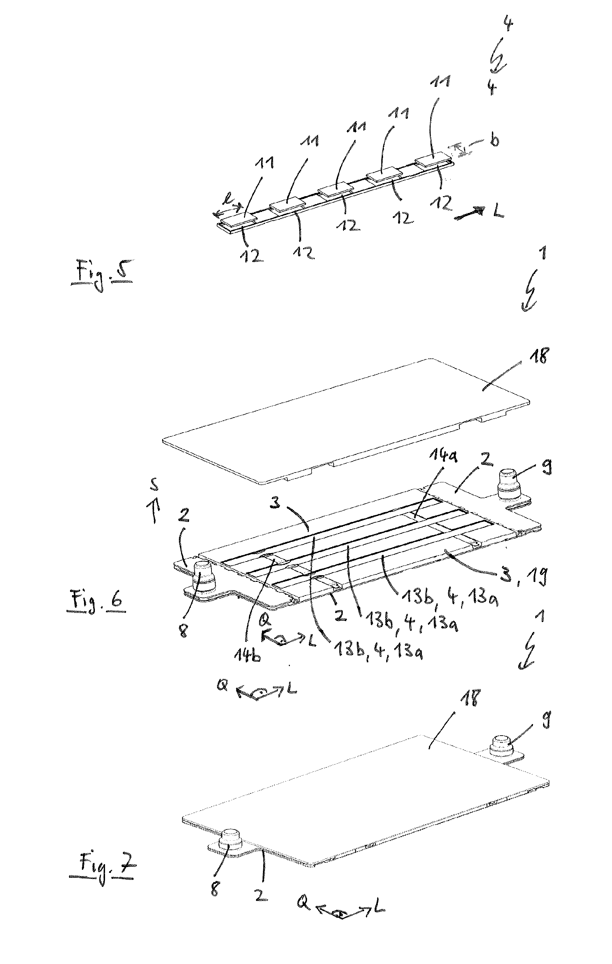

Die Figur 5 zeigt eine Detaildarstellung eines der in Figur 1 dargestellten drei Trägerteile 4. Das Trägerteil 4 ist demnach in der Art eines Trägerrahmens aufgebaut und mit fünf entlang der Längsrichtung L benachbart und im Abstand zueinander angeordneten Durchgangsöffnungen 12 versehen. Die Durchgangsöffnungen 12 weisen bezüglich ihrer Länge l und Breite b Abmessungen auf, die im Wesentlichen denen der fünf Heizelemente 11 entsprechen, welche in einem montierten Zustand in die Durchgangsöffnungen 12 eingesetzt sind. Typischerweise beträgt besagte Länge l der Heizelemente 11 bzw. der Durchgangsöffnungen 12 jeweils etwa 30mm und deren Breite zwischen 4mm und 13 mm. Idealerweise besitzen Trägerteil 4 und Heizelemente 11 auch eine nahezu gleich Bauteildicke, beispielsweise ungefähr 2mm, so dass die Ober- und Unterseite eines jeden Heizelements 11 nach dem Einsetzen in eine Durchgangsöffnung 12 mit der Ober- bzw. Unterseite des Trägerteils 4 fluchtet. Zur Fixierung der Heizelemente 11 in den Durchgangsöffnungen 12 können diese mit dem Trägerteil 4 verklebt werden.

Figur 2 zeigt eine besonders zweckmäßige Art und Weise, eine von den elektrischen Heizelementen 11 der Heiz- und Kühlvorrichtung 1 nach außen geführte elektrische Verbindung herzustellen, um diese mit elektrischer Energie von einer Energieversorgungseinheit - hierfür kann auch die mittels der Heiz- und Kühlvorrichtung 1 zu temperierende Batterie herangezogen werden - zu versorgen. Hierzu ist in jedem der drei Trägerteile 4 jeweils eine erste und zweite elektrische Kontaktplatte 13a, 13b aus Metall platziert, und zwar derart, dass die in den Durchgangsöffnungen 12 der Trägerteile 4 angeordneten Heizelemente 11 sandwichartig zwischen den beiden Kontaktplatten 13a, 13b liegen. Für den Fall, dass die elektrischen Anschlusselemente der Heizelemente 11 über eine elektrisch leitende Ausbildung der Ober- bzw. Unterseite der Heizelemente 11 realisiert sind, bietet es sich an, die elektrische Verbindung zwischen den elektrischen Kontaktplatten 13a, 13b und den Heizelementen 11 durch Aufkleben der Kontaktplatten 13a, 13b auf die Ober- bzw. Unterseite der Heizelemente 11 mittels eines elektrisch leitfähigen Klebstoffs herzustellen. Aus der Darstellung der Figur 2 lässt sich weiterhin entnehmen, dass die drei ersten elektrischen Kontaktplatten 13a mittels einer sich quer zu den entlang der Längserstreckungsrichtung L angeordneten Trägerteilen 4 erstreckenden ersten Verbindungsstrebe 14a sowohl mechanisch als auch elektrisch miteinander verbunden sind. Dies gilt in analoger Weise für die drei zweiten elektrischen Kontaktplatten 13b und eine diese elektrisch und mechanisch verbindende Verbindungsstrebe 14b.

Figur 4 illustriert die in Figur 1 gezeigte Isolierplatte 3 in einer separaten Darstellung. Die Isolierplatte 3 besitzt drei sich in Längsrichtung L erstreckende und benachbart zueinander angeordnete Durchgangsöffnungen 10, in welche die in Figur 5 gezeigten Trägerteile 4 eingesetzt werden können. Zur Aufnahme der Verbindungsstreben 14a, 14b in die Isolierplatte 3 sind in dieser zu den Verbindungsstreben 14a, 14b komplementäre Aussparungen 16a, 16b in der Art von Aufnahmenuten vorgesehen.

Um einen unerwünschten elektrischen Kontakt der elektrischen Kontaktplatten 13b mit der Bodenplatte 2 zu verhindern, wenn die Isolierplatte 3 auf der Bodenplatte 2 - welche aus einem elektrisch leitenden Material bestehen kann - angebracht wird, können zwischen den elektrischen Kontaktplatten 13b und der Bodenplatte 2 elektrisch isolierende Deckplatten 17 aus einer Keramik angeordnet werden, welche bezüglich ihrer Breite b und Länge l die gleichen Abmessungen wie die Trägerteile 4 aufweisen können. Dies wird aus der Darstellung der Figur 4 ersichtlich, welche drei solche Deckplatten 17 zeigt.

Die in Figur 6 gezeigte Heiz- und Kühlvorrichtung 1 wird durch ein Befestigen der Abdeckplatte 18 auf der Bodenplatte 2 bzw. auf der Isolierplatte 3 - beispielsweise durch Verkleben - komplettiert. Dieser Figur entnimmt man ferner, dass die vier Flachrohre 5 der Bodenplatte 2 - diese sind in der Darstellung der Figur 6 durch die Isolierplatte 3 verdeckt - und die drei Trägerteile 4 entlang der Querrichtung Q abwechselnd und benachbart zueinander angeordnet sind. Auf diese Weise wird eine homogene Verteilung der Heiz- und Kühlelemente lateral auf der Bodenplatte 2 erreicht, mit welcher betriebsmäßig eine gleichmäßige Erwärmung bzw. Abkühlung der Bodenplatte 2 erzielt werden kann.

Die Figur 7 zeigt schließlich die Heiz- und Kühlvorrichtung 1 in einem montierten und somit betriebsbereiten Zustand. In diesem Zustand sind Bodenplatte 2, Trägerteil 4, Isolierung 19 und Abdeckplatte 18 entlang der - jeweils orthogonal zur Querrichtung Q und zur Längsrichtung L verlaufenden - Stapelrichtung S benachbart zueinander angeordnet (vgl. hierzu auch Fig. 6).

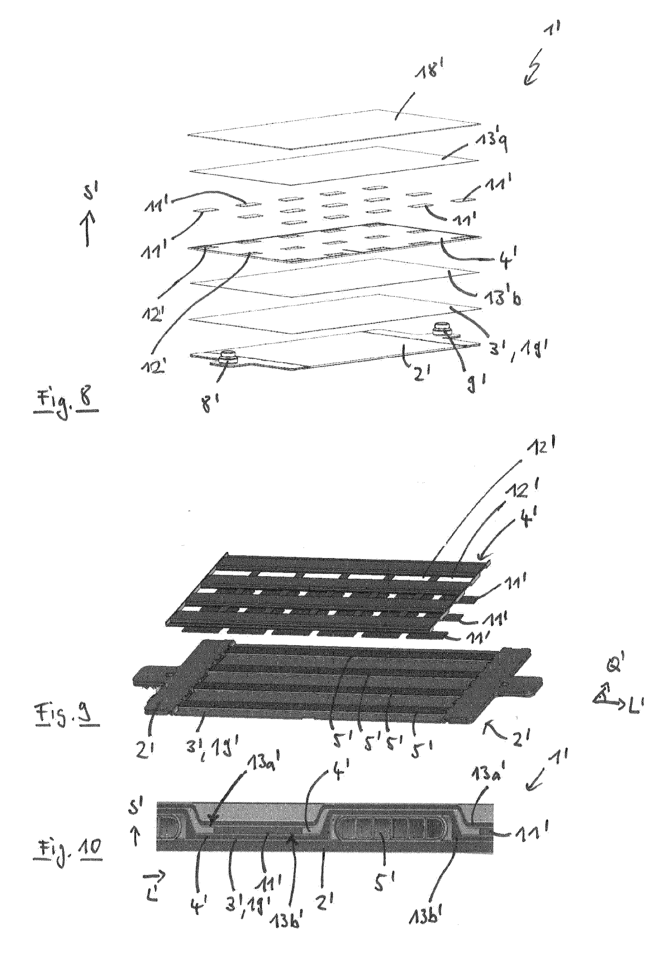

In der Figur 8 ist schematisch und in einer Explosionsdarstellung ein zweites Ausführungsbeispiel einer erfindungsgemäßen Heiz- und Kühlvorrichtung 1' gezeigt. Die Figur 9 zeigt eine perspektivische Detaildarstellung des Trägerteils 4', der oberen elektrischen Kontaktplatte 13a' und der Bodenplatte 2'; die Figur 10 zeigt einen Querschnitt der Heiz- und Kühlvorrichtung 1' in einem fertig montierten Zustand.

Das in den Figuren 8 bis 10 gezeigte Beispiel zeigt eine erfindungsgemäße Heiz- und Kühlvorrichtung 1' in einer Sandwich-Anordnung. Die Heiz- und Kühlvorrichtung 1' unterscheidet sich vom Beispiel gemäß der Figur 1 insbesondere darin, dass nur ein einziges Trägerteil 4' vorgesehen ist, in welchem rasterartig angeordnete Durchgangsöffnungen 12' vorgesehen sind. Dies verdeutlicht die perspektivische Ansicht der Figur 9, welche das Trägerteil 4' in Form eines Trägerrahmens mit insgesamt fünfzehn solchen Durchgangsöffnungen 12' zeigt. Die Heiz- und Kühlvorrichtung 1' besitzt jeweils nur eine einzige, gemeinsame erste und gemeinsame zweite elektrische Kontaktplatte 13'a, 13'b, die in Stapelrichtung S' jeweils sandwichartig zwischen Trägerteil 4' und Abdeckplatte 18' bzw. zwischen Isolierplatte 2' und Trägerteil 4' angeordnet sind. An einem äußeren Rand der beiden elektrischen Kontaktplatten 13'a, 13'b, die etwa als Blechformteile ausgebildet sein können, können elektrische Anschlusselemente zum Anschließen der Heizelemente 11' an eine Energieversorgungseinheit vorgesehen sein (nicht gezeigt). Die Isolierung 19' kann als Isolierplatte 3' aus einer Keramik gebildet sein; alternativ dazu kann auch eine auf der Bodenplatte 2' angeordnete Isolierfolie aus einem elektrisch isolierenden Material oder eine auf der Bodenplatte 2' aufgebrachte elektrisch isolierende Isolierschicht vorgesehen sein.

## Patentansprüche

1. Heiz- und Kühlvorrichtung (1; 1') für eine Batterie, insbesondere eines Kraftfahrzeugs,
- mit einer Bodenplatte (2; 2'), in welcher wenigstens ein Fluidpfad zum Durchströmen mit einem Kühl- oder Kältemittel vorgesehen ist,
- mit wenigstens einem Trägerteil (4; 4'), in welchem jeweils wenigstens ein thermisch mit der Bodenplatte (2; 2') koppelbares oder gekoppeltes elektrisches Heizelement (11; 11') vorgesehen ist,
- mit einer Abdeckplatte (18; 18'),
- wobei die Bodenplatte (2; 2'), das wenigstens eine Trägerteil (4; 4') und die Abdeckplatte (18; 18') entlang einer Stapelrichtung (S; S') benachbart zueinander angeordnet sind.

2. Heiz- und Kühlvorrichtung (1; 1') nach Anspruch 1,
**dadurch gekennzeichnet, dass**
die Heiz- und Kühlvorrichtung (1; 1') eine elektrische Isolierung (19; 19') umfasst, welche entlang der Stapelrichtung (S) zwischen Bodenplatte (2; 2') und Trägerteil (4; 4') angeordnet ist.

3. Heiz- und Kühlvorrichtung (1') nach Anspruch 1 oder 2,
**dadurch gekennzeichnet, dass**
genau ein als Trägerplatte ausgebildetes Trägerteil (4') mit wenigstens zwei Durchgangsöffnungen (10') vorgesehen ist, in welchen jeweils ein elektrisches Heizelement (11') angeordnet ist.

4. Heiz- und Kühlvorrichtung (1') nach einem der Ansprüche 1 bis 3,
**dadurch gekennzeichnet, dass**
- die Isolierung (19') als Isolierplatte (3') aus einem elektrisch isolierenden Material oder als eine auf der Bodenplatte (2') angeordnete Isolierfolie aus einem elektrisch isolierenden Material oder als eine auf der Bodenplatte (2') aufgebrachte elektrisch isolierende Isolierschicht ausgebildet ist,
- in einem montierten Zustand der Heiz- und Kühlvorrichtung (1') sowohl zwischen dem Trägerteil (4') und der Abdeckplatte (18') als auch zwischen dem Trägerteil (4') und dem Isolationselement (3') jeweils eine elektrisch leitende Kontaktplatte (13'a, 13'b) vorgesehen ist, welche zum Versorgen der Heizelemente (11') mit elektrischer Energie aus einer externen Energieversorgungseinheit elektrisch mit den elektrischen Heizelementen (11') verbunden ist.

5. Heiz- und Kühlvorrichtung (1') nach einem der vorhergehenden Ansprüche, **dadurch gekennzeichnet, dass**
in dem Trägerteil (4') wenigstens vier, vorzugsweise 15, höchst vorzugsweise 20, Durchgangsöffnungen (10') mit jeweiligen Heizelementen (11') vorgesehen sind, welche bezüglich einer Draufsicht auf das Trägerteil (4') rasterartig auf diesem angeordnet sind.

6. Heiz- und Kühlvorrichtung (1) nach Anspruch 1,
**dadurch gekennzeichnet, dass**
- wenigstens zwei, vorzugsweise drei, Trägerteile (4) vorgesehen sind, welche jeweils wenigstens zwei Durchgangsöffnungen (12) aufweisen, in welchen jeweils ein elektrisches Heizelement (11) angeordnet ist,
- die Isolierung (19) als Isolierplatte (3) ausgebildet ist, in welcher wenigstens zwei Durchgangsöffnungen (10) vorgesehen sind, in welchen jeweils ein Trägerteil (4) angeordnet ist.

7. Heiz- und Kühlvorrichtung (1) nach Anspruch 6,
**dadurch gekennzeichnet, dass**
die in der Isolierplatte (3) und/oder die in dem Trägerteil (4) vorgesehenen Durchgangsöffnungen (10, 12) im Wesentlichen reckteckförmig ausgebildet sind.

8. Heiz- und Kühlvorrichtung (1) nach einem der Ansprüche 5 bis 7,
**dadurch gekennzeichnet, dass**
an jedem Trägerteil (4) auf einer ersten Seite eine erste elektrisch leitende Kontaktplatte (13a) und auf einer der ersten Seite gegenüberliegenden zweiten Seite eine zweite elektrisch leitende Kontaktplatte (13b) vorgesehen ist, zwischen welchen die elektrischen Heizelemente (11) sandwichartig in den Durchgangsöffnungen (10) der Isolierplatte (3) angeordnet sind.

9. Heiz- und Kühlvorrichtung (1) nach Anspruch 8,
**dadurch gekennzeichnet, dass**
zwischen der zweiten elektrischen Kontaktplatte (13a) und der Bodenplatte (2) eine elektrisch isolierende Deckplatte (17) aus einer Keramik vorgesehen ist.

10. Heiz- und Kühlvorrichtung (1) nach einem der Ansprüche 6 bis 9,
**dadurch gekennzeichnet, dass**
die Isolierplatte (3) auf einer der Bodenplatte (2) zugewandten Seite eine im Wesentlichen komplementär zur Bodenplatte (2) ausgebildete Oberflächengeometrie aufweist.

11. Heiz- und Kühlvorrichtung (1; 1') nach einem der vorhergehenden Ansprüche,
**dadurch gekennzeichnet, dass**
der in der Bodenplatte (2; 2') vorgesehene wenigstens eine Fluidpfad durch wenigstens ein auf der Bodenplatte (2; 2') vorgesehenes Flachrohr (5; 5') ausgebildet ist, welches sich wenigstens abschnittsweise entlang einer Längsrichtung (L; L') der Bodenplatte (2'; 2') erstreckt.

12. Heiz- und Kühlvorrichtung nach Anspruch 11,
**dadurch gekennzeichnet, dass**
wenigstens zwei, vorzugsweise vier Flachrohre (5; 5') vorgesehen sind, welche sich entlang der Längsrichtung (L; L') der Bodenplatte (2; 2') im Abstand und im Wesentlichen parallel zueinander auf einer der Isolierplatte (3; 3') zugewandten Seite der Bodenplatte (2'; 2') erstrecken.

13. Heiz- und Kühlvorrichtung (1;1') nach Anspruch 11 oder 12,
**dadurch gekennzeichnet, dass**
die Flachrohre (5; 5') jeweils integral an der Bodenplatte (2; 2') ausgeformt sind oder an der Bodenplatte (2; 2') angelötet oder angeschweißt sind.

14. Heiz- und Kühlvorrichtung (1; 1') nach einem der Ansprüche 11 bis 13,
**dadurch gekennzeichnet, dass**
die Durchgangsöffnungen (10; 10') in der Isolierplatte (3; 3') und die Flachrohre (5; 5') der Bodenplatte (2; 2') bezüglich einer gemeinsamen Querrichtung (Q; Q') von Bodenplatte (2; 2') und Isolierplatte (3; 3') abwechselnd nebeneinander angeordnet sind.

15. Heiz- und Kühlvorrichtung (1) nach Anspruch einem der Ansprüche 11 bis 14, **dadurch gekennzeichnet, dass**
die Bodenplatte (2) vier Flachrohre (5) und die Isolierplatte (3) drei Durchgangsöffnungen (10) aufweist.

16. Heiz- und Kühlvorrichtung (1) nach einem der Ansprüche 8 bis 15,
**dadurch gekennzeichnet, dass**
die in den Durchgangsöffnungen (10) angeordneten ersten und zweiten elektrischen Kontaktplatten (13a, 13b) jeweils mittels einer Verbindungsstrebe (14a, 14b) mechanisch starr und elektrisch leitend miteinander verbunden sind.

17. Heiz- und Kühlvorrichtung (1) nach Anspruch 16,
**dadurch gekennzeichnet, dass**
in der Isolierplatte (3) jeweils eine komplementär zu der Verbindungsstrebe (14a, 14b) ausgebildete Aussparung (16a, 16b) in der Art einer Aufnahmenut vorgesehen ist, in welcher die Verbindungsstrebe (14a, 14b) aufgenommen ist.

18. Heiz- und Kühlvorrichtung nach einem der vorhergehenden Ansprüche,
**dadurch gekennzeichnet, dass**
die Heizelemente (11) als plattenartige PTC-Heizelemente ausgebildet sind.

19. Batterieanordnung für ein Kraftfahrzeug,
- mit einer Batterie, insbesondere einer Li-Ionen-Batterie,
- mit einer thermisch mit der Batterie gekoppelten Heiz- und Kühlvorrichtung (1; 1') nach einem der vorhergehenden Ansprüche.

20. Kraftfahrzeug mit wenigstens einer Batterieanordnung nach Anspruch 19.
